# EUROPÄISCHE PATENTSCHRIFT

(11) **EP 1 526 217 B1**
(45) Veröffentlichungstag und Bekanntmachung des Hinweises auf die Patenterteilung: **02.01.2008**
(21) Anmeldenummer: 04104598.0
(22) Anmeldetag: 22.09.2004
(51) Int. Cl.: D21G 1/02, F16C 13/00

(54) **Durchbiegungseinstellwalze**
Controlled deflection roll
Rouleau à courbure réglable

(30) Priorität: 23.10.2003 DE 10349341
(43) Veröffentlichungstag der Anmeldung: 27.04.2005
(73) Patentinhaber: Voith Patent GmbH, 89522 Heidenheim (DE)
(72) Erfinder: Schnyder, Eugen, 5622 Waltenschwil (CH)
(74) Vertreter: Kunze, Klaus

(56) Entgegenhaltungen:
- DE-A- 19 802 723
- DE-C- 4 244 226
- DE-U- 9 205 081
- US-A- 4 090 282
- US-A- 4 183 128

## Beschreibung

Die Erfindung betrifft eine Durchbiegungseinstellwalze mit einem umlaufenden Walzenmantel, einem den Walzenmantel axial durchsetzenden drehfesten Joch und einer Mehrzahl von in Axialrichtung aufeinander folgenden, vorzugsweise hydraulischen Stützelementen, über die die Innenseite des Walzenmantels jeweils mit einer Stützkraft beaufschlagbar ist, wobei die Wirkbreite der Walze variabel einstellbar ist und jadem zur Einstellung der Wirkbreite mit variablem Druck beaufschlagbaren Stützelement jeweils ein Ventil mit einem verstellbaren Schieberkolben zugeordnet ist, der in unterschiedliche Positonen verstellbar ist, in denen das zugeordnete Stützelement mit unterschiedlichen Drücken beaufschlagbar ist (siehe z.B. : US 4183128A und DE 19802723).

Bei innen gestützten Durchbiegungseinstellwalzen mit relativ flexiblem Walzenmantel werden die Material- oder Warenbahnen bei vielen Prozessen mit einem im wesentlichen gleichmäßigen Druck an die Gegenwalze gepresst. Derartige Durchbiegungseinstellwalzen können lediglich mit Stützelementen bzw. Stützquellen oder zusätzlich mit wenigstens einer zwischen den Stützelementen und dem Walzenmantel angeordneten Stützleiste versehen sein. Beim Fahren mit reduzierter Bahnbreite ist es häufig erforderlich, die außerhalb der Bahn liegenden Bereiche zu entlasten und die überhängenden Bereiche mit den Gegenzonen von der Gegenwalze wegzuziehen. Dabei muss ein Kontakt zwischen dem Walzenmantel und der Gegenwalze außerhalb der Materialbahn vermieden werden. Je nach Steifigkeit des Walzenmantels entlasten nun die Gegenzonen den Randbereich der Materialbahn mehr oder weniger weit in die Materialbahn hinein, was zu negativen Erscheinungen auf der Materialbahn führen kann. Um dies zu vermeiden, wird bei derartigen Ausführungen meistens die innere Wirkbreite der Walze im Verhältnis zu der Breite der Materialbahn etwas breiter eingestellt, z.B. entsprechend einer Stützelement- bzw. Stützquellenbreite, wodurch die Rückzugskräfte der Gegenzonen kompensiert werden. Bei einem solchen Lösungsansatz läuft der Walzenmantel relativ flach über die Warenkante hinaus. Ideal wäre nun aber ein "abruptes" Separieren. Typische Einsatzgebiete derartiger Walzen sind z.B. die Textilkalander, bei denen die Gegenwalze heiß ist und das Mantelmaterial (z.B. Polyamid) bei einem Kontakt mit der Gegenwalze angeschmolzen würde, Beschichtungsprozesse mit variabler Bahnbreite, bei denen die Beschichtungsmasse bei einem Kontakt auf den Walzenmantel aufgetragen würde, oder der Dekordruckprozess, bei dem sich die Druckfarbe außerhalb der Material- oder Warenbahn auf dem Walzenmantel aufbauen würde.

Bei einer aus der EP 0 438 580 B1 bekannten Durchbiegungseinstellwalze der eingangs genannten Art sind zur Verstellung der Wirkbreite axial verschiebbare Trennwände vorgesehen, die über Spindeln verstellbar sind. Mit einer entsprechenden Verstellung der Trennwände werden die Stützelemente oder - quellen teilweise von der Versorgung abgetrennt. Zudem sind einer Verstellung der Wirkbreite deutlich Grenzen gesetzt. In der US 5 662 570 ist eine Durchbiegungseinstellwalze beschrieben, bei der den Stützelementen jeweils ein verschiebbares, in der Axialbohrung des Jochs angeordnetes Drosselelement zugeordnet ist. Dabei wird die Menge des einem jeweiligen Stützelement zugeführten Druckfluids durch den zwischen dem jeweiligen Drosselelement und der Innenwand der Axialbohrung vorgesehenen Spalt bestimmt, der durch eine radiale Beaufschlagung der Drosselelemente entsprechend variierbar ist.

Lastschaltbare Breitenverstellungen sind bekannt. Neben der bereits bekannten Bauart mit inneren Spindeln und in einer Zentralbohrung angeordneten verschiebbaren Koben, die außerhalb des Kolbens liegende Stützquellen von der Versorgung abtrennen, sind auch Ausführungen bekannt, bei denen alle Stützquellen mit extern angeordneten Schaltventilen verbunden sind. Dabei können einzelne oder ganze Gruppen von Stützelementen weggeschaltet werden.

Außer mechanisch im Joch verfahrbaren Kolben sind insbesondere auch bereits Ventile bekannt, die über einen Schlitten auf- bzw. zugeschaltet werden. Bekannt sind auch Ausführungen mit außen aufgebrachten Ventilen in Verbindung mit den Elementen (verrohrt/verbohrt).

Der Erfindung liegt die Aufgabe zugrunde, eine Durchbiegungseinstellwalze der eingangs genannten Art zu schaffen, bei der die Wirkbreite unter Aufrechterhaltung der jeweils gewünschten Anpresskraft über die Bahnbreite und unter Vermeidung eines unerwünschten Kontaktes der nicht bahnberührten Walzenränder mit der Gegenwalze besser einstellbar und besser an die jeweilige Bahnbreite anpassbar ist.

Diese Aufgabe wird erfindungsgemäß dadurch gelöst, dass jedem zur Einstellung der Wirkbreite mit variablem Druck beaufschlagbaren Stützelement jeweils ein Ventil mit einem verstellbaren Schieberkolben zugeordnet ist, der in unterschiedliche Positionen verstellbar ist, in denen das zugeordnete Stützelement mit unterschiedlichen Drücken beaufschlagbar ist. Der Schieberkolben kann z.B. axial oder radial verstellbar sein. Dabei ist der Schieberkolben bevorzugt in wenigstens eine Position verstellbar, in der das zugeordnete Stützelement mit einem von dem für die Stützelemente im Bereich der Walzenmittelzone bestimmten Druck unabhängigen Druck beaufschlagbar ist.

Es kann somit insbesondere eine so genannte einzonige (Stützelemente im Bereich der Walzenmittelzone mit gleichem Druck beaufschlagt) Biegekompensationswalze mit Breitenverstellung oder Randabschaltung verwirklicht werden, die im Bereich eines oder beider Bahnenden jeweils mit einer zusätzlichen Druckzone versehen ist, die mit der Breitenverstellung verschiebbar und mit einem von der Walzenmittel- oder Kernzone unabhängigen Druckniveau versorgt werden kann. Somit kann die Breite der Walzenmittelzone zumindest im wesentlichen entsprechend der Material- oder Warenbahnbreite gewählt werden. Die aus der Rückzugskomponente resultierende Kraftabweichung kann nun über diese Randzonen kompensiert werden. Im Ergebnis wird damit eine gleichmäßigere Anpresskraft über die Materialbahnbreite sowie eine wesentlich ausgeprägtere bzw. steilere Wegkrümmkurve des Walzenmantels erreicht. Die Ventile sind vorteilhafterweise unter Last schaltbar, d.h. die Wirkbreite ist unter Druck verstellbar. Dies kann unter anderen dadurch erreicht werden, dass das einen jeweiligen Schieberkolben aufnehmende Ventilgehäuse innen auf der den Ventilanschlüssen gegenüberliegenden Seite radial angebohrt und der Schieberkolben mit Umfangsnuten für die radiale Druckentlastung der den Ventilanschlüssen zugeordneten Bohrungen versehen ist. Zudem ist zweckmäßigerweise auch für eine axiale Druckentlastung gesorgt.

Die erfindungsgemäße Lösung ist relativ einfach in bestehende Walzenkonzepte integrierbar und erfordert bezüglich der Druckversorgung und der Steuerung lediglich einen geringen Mehraufwand. Da stets der gleiche Ventilkörper eingesetzt werden kann, ist dieser Mehraufwand minimal. Grundsätzlich könnte auch eine größere Anzahl von beispielsweise elektro-hydraulischen Proportionalventilen eingesetzt werden, was allerdings mit einem relativ großen Aufwand verbunden wäre.

Bei einer bevorzugten praktischen Ausführungsform der erfindungsgemäßen Durchbiegungseinstellwalze ist der Schiebkolben eines jeweiligen Ventils in zumindest drei Positionen verstellbar, in denen das zugeordnete Stützelement mit unterschiedlichen Drücken beaufschlagbar ist.

Bevorzugt ist ein jeweiliges Stützelement über das zugeordnete Ventil in Abhängigkeit von der insbesondere axialen bzw. radialen Position des Schieberkolbens wahlweise zumindest mit einem für die Stützelemente im Bereich der Walzenmittelzone bestimmten Hauptdruck, mit einem Randzonendruck und mit einem Gegenzonendruck beaufschlagbar bzw. drucklos schaltbar. Dabei kann der Randzonendruck insbesondere unabhängig vom Hauptdruck erzeugt sein. Vorteilhafterweise ist zur Erzeugung dieses Randzonendrucks ein getrennter Druckkreis vorgesehen.

Die Ventile sind bevorzugt im Bereich des Jochs angeordnet, wobei deren Schieberkolben jeweils relativ zu im Bereich des Jochs vorgesehenen Ventilanschlüssen verschiebbar sind.

Von Vorteil ist insbesondere auch, wenn die Schieberkolben zumindest eines Teils der Ventile mechanisch gekoppelt sind. Dabei können insbesondere zumindest die Schieberkolben der einer jeweiligen Randzone zugeordneten Ventile mechanische gekoppelt sein. In bestimmten Fällen kann es von Vorteil sein, wenn die Schieberkolben sämtlicher Ventile mechanisch gekoppelt sind.

Bei einer bevorzugten praktischen Ausführungsform der erfindungsgemäßen Durchbiegungseinstellwalze ist der Schieberkolben eines jeweiligen Ventils über zwei drehfest mit einer drehbaren Welle verbundene Kurvenscheiben zwangsgesteuert verschiebbar und das Ventil entsprechend über die Welle ansteuerbar. Durch Drehen der Welle wird der Schieberkolben also z.B. axial verstellt. Dabei kann insbesondere an den beiden Kolbenenden jeweils eine Kurvenscheibe vorgesehen sein. Bevorzugt verläuft die Welle parallel zur Walzenachse.

Vorzugsweise sind zumindest die Schieberkolben der einer jeweiligen Randzone zugeordneten Ventile über eine gemeinsame Welle ansteuerbar. Zeckmäßigerweise sind die Schieberkolben sämtlicher Ventile über ein durchgehende gemeinsam Welle ansteuerbar.

Vorteilhafterweise sind die Ventile über die zugeordnete Welle so ansteuerbar, dass mit einer jeweiligen Drehung der Welle um einen bestimmten Drehwinkel die Wirkbreite der Walze um eine Stützelementbreite weitergeschaltet wird.

Vorteilhafterweise ist die Welle über ein vorzugsweise mit einer Rasterung versehenes Handrad, einen Ventildrehantrieb und/oder dergleichen insbesondere stufenlos oder in Stufen betätigbar.

Die Kurvenscheiben und/oder der Schieberkolben können insbesondere so ausgeführt sein, dass ein jeweiliges Stützelement über das zugeordnete Ventil mit einem stufenlos drosselbaren Randzonendruck beaufschlagbar ist. Dabei sind bevorzugt mehrere einer jeweiligen Randzone zugeordnete Stützelemente über die ihnen zugeordneten Ventile so ansteuerbar, dass sich über den entsprechenden Bereich von Stützelementen ein axial nach innen ansteigender oder abfallender Druckverlauf ergibt.

Der Walzenmantel ist vorzugsweise flexibel. Er kann beispielsweise aus homogenem Kunststoff, vorzugsweise aus homogenem Polyamid, bestehen.

Die Stützelemente im Bereich der Walzemittelzonen sind vorzugsweise mit einem gleichen Druck beaufschlagbar, so dass sich praktisch eine einzonige Biegekompensationswalze mit Breitenverstellung ergibt.

Bei einer bevorzugten praktischen Ausführungsform der erfindungsgemäßen Durchbiegungseinstellwalze sind bei einer jeweiligen Wirkbreitenverstellung im Bereich einer jeweiligen Randzone jeweils zwei oder mehr bzw. zumindest zwei unmittelbar aufeinander folgende Stützelemente über die zugeordneten Ventile mit einem gestuften Randzonendruck beaufschlagbar. Dabei kann das jeweils axial Innere der beiden Stützelemente durch Abdrosseln des Randzonendrucks z.B. über eine entsprechende Ventilzwischenstellung mit dem geringeren Druck beaufschlagbar sein.

Die Ventile können insbesondere in einer axialen Bohrung des Jochs vorgesehen sein.

Der Randzonendruck kann kleiner oder auch größer als der Hauptzonendruck sein.

Zwischen den Stützelemente und dem Walzenmantel kann wenigstens eine Stützleiste vorgesehen sein.

Die erfindungsgemäße Durchbiegungseinstellwalze ist mit Vorteil insbesondere zum Glätten, zum Kalandrieren (z.B. Textilkalander), zum Bedrucken, zum Beschichten oder zum Veredeln von Materialbahnen verwendbar.

Es sind also unter anderem solche Ausführungen der Durchbiegungseinstellwalze denkbar, bei denen der Walze zumindest drei Drücke, nämlich ein Hauptdruck, ein Randzonendruck und ein Gegenzonendruck zuführbar sind. In bestimmten Fällen kann es auch sinnvoll sein, die linken und rechten Rand- und Gegenzonen unabhängig voneinander zu versorgen, was insbesondere bei nicht mittiger Bahnlage erforderlich sein kann. Die Ventile können insbesondere so angesteuert werden, dass das jeweilige Stützelement entweder mit dem Druck der Walzenmittel- oder Kernzone, mit dem Druck der Randzonen oder aber drucklos geschaltet wird. Die einzelnen Ventile können insbesondere mechanisch gekoppelt sein, wobei sie bei einer bevorzugten Ausführungsform auf eine durchgehende Welle aufgesetzt sind. Die Weiterschaltung um eine Stützelement- bzw. Stützquellenbreite kann beispielsweise mit einem jeweiligen Drehwinkel der Welle von 30° erfolgen. In diesem Fall lassen sich über den Winkelbreich von 360° zwölf verschiedene Breiten schalten, was für bestimmte Prozesse bereits ausreichend ist. Grundsätzlich können auch mehr Teilschritte verwirklicht sein. Überdies sind auch Ausführungen mit weniger Teilschritten denkbar.

Die Ventile können insbesondere jeweils so ausgeführt sein, dass der Schieberkolben über zwei Kurvenscheiben zwangsgesteuert verschiebbar ist. Die Kanten eines jeweiligen Schieberkolbens können derart angeordnet und/oder ausgeführt sein, dass bei einer entsprechenden Drehstellung der eine entsprechende Form aufweisenden Kurvenscheiben die gewünschte Beschaltung erzielt wird. Die Zentralwelle kann beispielsweise mit einem mit einer Rasterung versehenen Handrad oder über einen Ventilantrieb je nach erwünschter Wirkbreite und Lage der Randzonen in die zugehörige Drehwinkelposition gedreht werden. Mit einer entsprechenden Gestaltung der Kurvenscheiben und des Schieberkolbens eines jeweiligen Ventils kann der Zusatzdruck im Randbereich sogar pro Element stufenlos gedrosselt werden, so dass unter Einbeziehung mehrerer Randstützelemente bzw. quellen ein ansteigender oder abfallender Druckverlust im Kantenbereich erzeugt werden kann. Ein abfallender Druckverlauf kann beispielsweise zur Erzielung einer gleichmäßigen Anpresskraft z.B. bei dicken Produkträndern zweckmäßig sein.

Insbesondere für einen Einsatz in einem Textilkalander kann die Durchbiegungseinstellwalze mit einem flexiblen Walzenmantel z.B. aus homogenem Kunststoff, insbesondere homogenem Polyamid bestückt werden. Die Wirkbreite oder Randabschaltung kann insbesondere auch unter Last bzw. Druck verstellbar sein. Unter jedem bezüglich der Wirkbreitenverstellung relevanten Stützelement ist eine Ventileinheit vorgesehen. Im Walzenmittelbereich liegt vorzugsweise ein gleichmäßiger Druck an. Im Randbereich ist der Druck kontrolliert verstellbar. Es können z.B. die letzten beiden Stützelemente pro Seite mit Wirkbreitenverstellung verschiebbar sein. Durch Abdrosseln des z.B. inneren Elementes über eine entsprechende Ventilzwischenstellung kann im Randbereich ein gestufter Druck erzeugt werden. Der Randdruck wird bevorzugt über einen separaten Druckkreis mit separater Pumpe bereitgestellt. Dadurch ist das Joch vor einer Überlastung gesichert, da die Zusatzpumpe eine begrenzte Fördermenge besitzt. Die Materialbahn kann mittig, außermittig oder einseitig angeschlagen sein. Die Verstellung über die Welle bzw. Zentralrohr kann beispielsweise von Hand oder über einen Drehantrieb z.B. über einen Winkelbereich von 0 bis 360° erfolge. Es können beispielsweise die folgenden gezielt einstellbaren Drücke zugeführt werden: Hauptdruck, Randdruck, Gegenzonendruck. Es können beispielsweise in einer Kernlochbohrung oder Jochbohrung, bzw. im Fall einer L-Anordnung von Walzen, in zwei Bohrungen entsprechende Schaltventile vorgesehen sein.

Die Erfindung ist mit besonderem Vorteil im Bereich des Dekor-Tiefdrucks anwendbar. Grundsätzlich ist die Erfindung überall dort mit Vorteil anwendbar, wo ein möglichst gleichmäßiger Anpressdruck über die Bahnbreite unter Verwendung eines relativ flexiblen Mantels erzielt werden soll. Die Erfindung ist somit insbesondere auch zum Bedrucken, Beschichten und Veredeln von Materialbahnen aus unterschiedlichen Materialien denkbar.

Bezüglich der Wirkbreitenverstellung sind unter anderem die folgenden Merkmale einzeln oder in Kombination miteinander von besonderem Vorteil:
- Einbringen von Elementen bzw. Beschaltungen mit translatorischer Bewegung
- Einbringen von Ventileinheiten mit Drehschiebern
- Stützelemente nach außen verbohren/verrohren und mechanisch beschalten (z.B. über Drehschieber)
- Wie zuvor, wobei jedoch jedem Element ein Proportionalventil zugeordnet und die Elemente über Rechner beschaltet werden
- Anstelle des Zusatzdruckes wird generell ein höherer Druck eingebracht, wobei über die Ventile der Hauptbereich abgedrosselt wird, wobei jedoch die Gefahr einer Jochüberlastung besteht, wenn plötzlich allen Stützelementen der höhere Druck zugeführt wird.

Die beschriebene Beschaltung ist auch über einen Drehschieber realisierbar. Man kann etwa ein Innen- und ein Außengehäuse vorsehen, wobei das Innengehäuse gedreht werden kann. Dies ist zwar aufwändiger, lässt sich aber ebenfalls zum Laufen bringen. Man kann den Längsschieber so gestalten (Löcher am Umfang in der jeweils richtigen Position), dass er seinen "Job" erfüllt.

Außer einer Randdruckerhöhung ist grundsätzlich auch eine Randdruckreduktion denkbar, die beispielsweise bei einem dicken Materialrand zweckmäßig ist.

Bei der Durchbiegungseinstellwalze kann es sich beispielsweise um eine selbstanstellende, so genannte F-Walze oder um eine konzentrisch geführte, so genannte K-Walze mit Zusatzkraft von außen handeln. Sie kann beispielsweise als L-Walze mit zwei Wirkfugen oder als I-Walze mit nur einer Wirkfuge ausgeführt sein. Es können, wie bereits erwähnt, Einzelstützquellen oder eine Leiste mit Einzel-Stützkolben unterstützt vorgesehen sein.

Wie bereits erwähnt, umfasst die Durchbiegungsausgleichswalze vorzugsweise einen flexiblen Walzenmantel. Dieser kann beispielsweise wie folgt beschaffen sein:
- metallisch (sehr dünnwandig)
- Kunststoff homogen (Polyamid-Textil)
- Kunststoff verstärkt (z.B. GFK, CFK)
- Polyurethan-Schichtaufbau
- Polyurethan verstärkt
- Gummi homogen
- Gummi-Schichtaufbau
- Gummi verstärkt

Bevorzugt sind die axialen Schieberkolben der Ventile zwar axial, d.h. parallel zur Walzenachse verstellbar. Man könnte die Schieberkolben jedoch beispielsweise um 90° drehen. Ein jeweiliger Schieberkolben wäre dann radial angeordnet bzw. verstellbar, d.h. anstelle der zwei Kulissen würde nur noch eine mit nach innen gerichteten Berg-/Talkonturen existieren. Das System würde auch unter diesen Umständen funktionieren. Da die Bohrung im Fall einer radialen Ausrichtung größer sein müsste, wird jedoch die axiale Lösung bevorzugt.

Die Erfindung wird im folgenden anhand von Ausführungsbeispielen unter Bezugnahme auf die Zeichnung näher erläutert; in dieser zeigen:
- Figur 1: eine vereinfachte schematische Längsschnittdarstellung einer Durchbiegungsausgleichswalze,
- Figur 2: eine vergrößerte Längsschnittdarstellung zweier aufeinander folgender Ventile der Durchbiegungsausgleichswalze gemäß Figur 1
- Figur 3: eine schematische Längsschnittdarstellung eines Ventils, in der der Schieberkolben eine Stellung einnimmt, in der das betreffende Stützelement druckentlastet ist,
- Figur 4: eine schematische Längsschnittdarstellung des Ventil gemäß Figur 3, wobei der Schieberkolben jedoch eine Stellung einnimmt, in der das betreffende Stützelement mit einem erhöhten Randzonedruck beaufschlagt wird,
- Figur 5: eine schematische Längsschnittdarstellung des Ventils gemäß Figur 3, wobei der Schieberkolben jedoch eine Stellung einnimmt, in der das betreffende Stützelement mit dem Hauptdruck beaufschlagt wird,
- Figur 6a: den Verlauf des über die Bahnbreite erzeugten Druckes, wobei im Bereich der Randzonen jeweils ein ungestufter Druck vorliegt,
- Figur 6b: den Verlauf des über die Bahnbreite erzeugten Drucks, wobei im Bereich der Randzonen ein gestufter Druck vorliegt,
- Figur 7: in tabellarischer Form verschiedene Einstellungen der Kurvenscheiben und deren Auswirkungen auf die verschiedenen Stützzonen und
- Figuren 8a bis 81: die verschiedenen, sich aus den Einstellungen gemäß Figur 7 ergebenden Druckverläufe über die Bahnbreite.

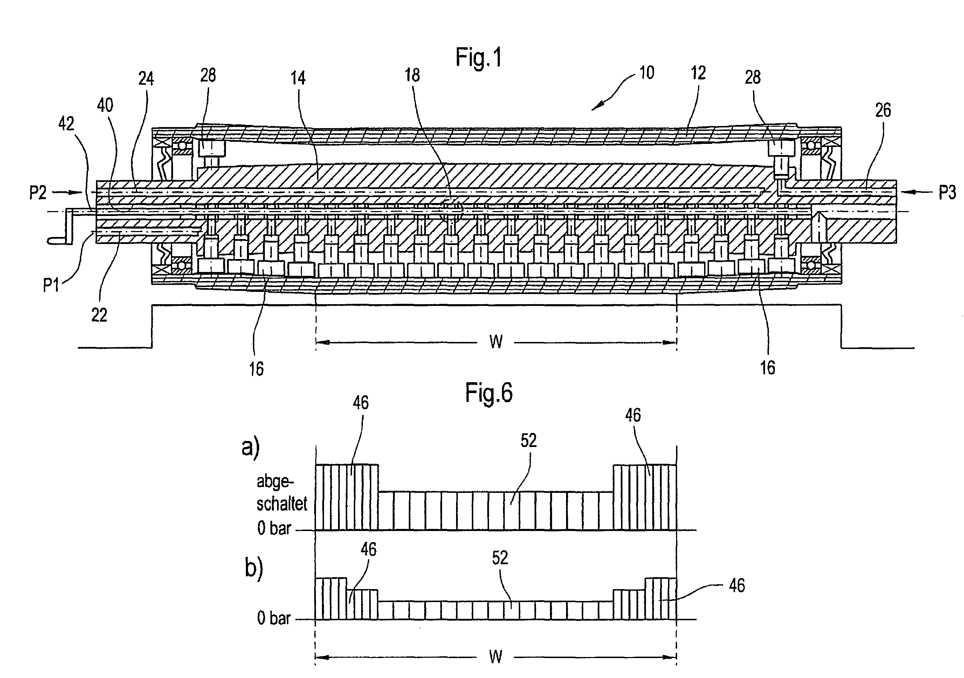

Figur 1 zeigt in vereinfachter schematischer Längsschnittdarstellung eine Durchbiegungsausgleichwalze 10.

Die Durchbiegungsausgleichwalze 10 umfasst einen umlaufenden, vorzugsweise flexiblen Walzenmantel 12, ein den Walzenmantel 12 axial durchsetzendes drehfestes Joch 14 und eine Vielzahl von in Axialrichtung aufeinander folgenden hydraulischen Stützelementen 16. Über diese Stützelemente 16 ist die Innenseite des Walzenmantels 12 jeweils mit einer Stützkraft beaufschlagbar. Dabei ist die Wirkbreite W der Durchbiegungseinstellwalze 10 in der weiter unter näher beschriebenen Weise variabel einstellbar.

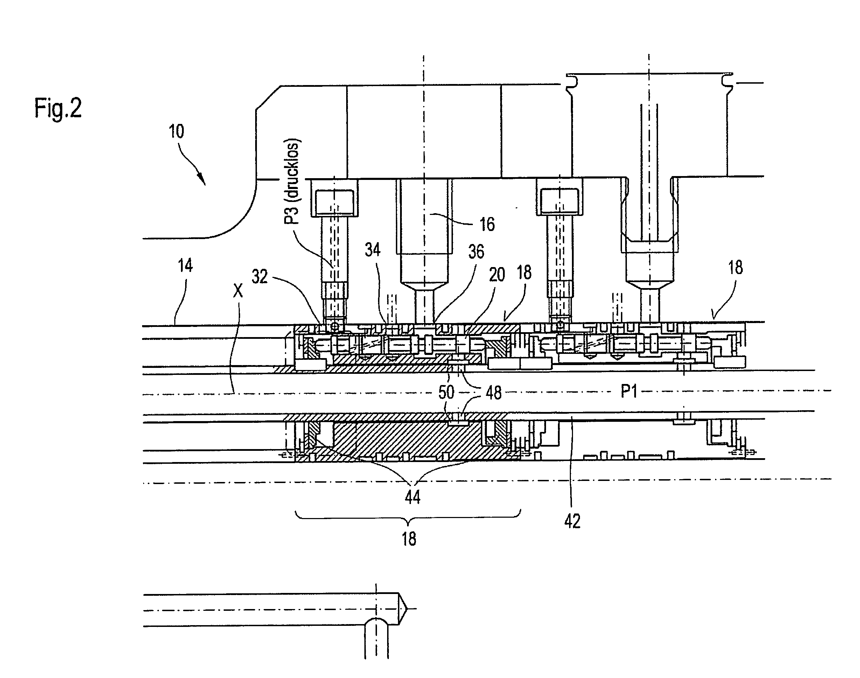

Jedem zur Einstellung der Wirkbreite W mit variablem Druck beaufschlagbaren Stützelemente 16 ist jeweils ein Ventil 18 (vgl. auch die Figuren 2 bis 5) zugeordnet, über das das zugeordnete Stützelement 16 mit unterschiedlichen Drücken beaufschlagbar ist. Dazu umfassen die betreffenden Ventile 18 j e-weils einen axial verstellbaren Schieberkolben 20 (vgl. die Figuren 2 bis 5), der in unterschiedliche Positionen verstellbar ist, in denen das zugeordnete Stützelemente 16 jeweils mit einem anderen Druck beaufschlagt wird.

Wie insbesondere anhand der Figur 1 zu erkennen ist, wird der Durchbiegungseinstellwalze 10 über einen im Joch 14 vorgesehenen axialen Kanal 22 ein für die Stützelemente 16 im Bereich der Walzenmittelzone bestimmter Hauptdruck P1, über einen axialen Kanal 24 des Jochs 14 ein Randzonendruck P2 und über einen ebenfalls im Joch 14 ausgebildeten axialen Kanal 26 ein Gegenzonendruck P3 zugeführt. Wie anhand der Figur 1 zu erkennen ist, wird der Gegenzonendruck P3 den Gegenzonen 28 zugeführt.

Der Schieberkolben 20 eines jeweiligen Ventils 18 ist in zumindest drei Positionen verstellbar, in denen das zugeordnete Stützelement 16 mit unterschiedlichen Drücken beaufschlagbar ist. Dabei ist ein jeweiliges Stützelement 16 über das zugeordnete Ventil 18 in Abhängigkeit von der axialen Position des Schieberkolbens 20 wahlweise zumindest mit dem für die Stützelemente 16 im Bereich der Walzenmittelzone bestimmten Hauptdruck P1, mit dem Randzonendruck P2 und mit dem Gegenzonendruck P3 beaufschlagbar bzw. drucklos schaltbar. Dabei ist der Randzonendruck P2 vorzugsweise unabhängig vom Hauptdruck P1 erzeugt. Zur Erzeugung des Randzonendrucks P2 kann also insbesondere ein getrennter Druckkreis vorgesehen sein.

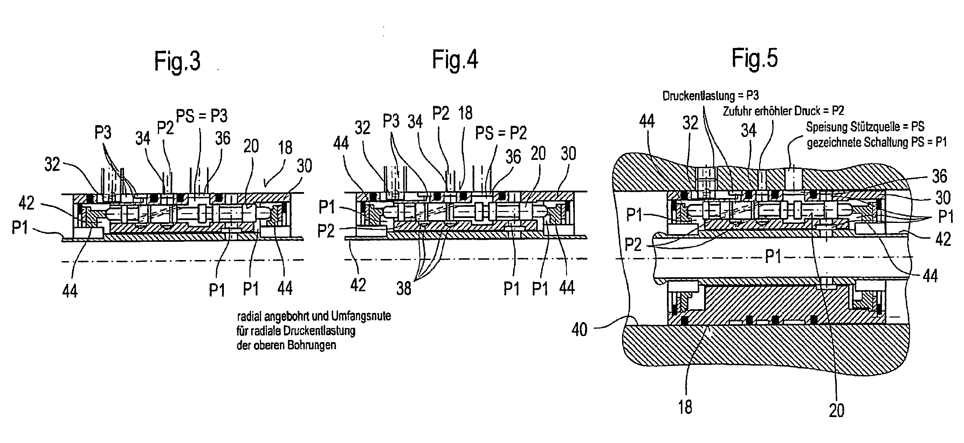

Die Ventile 18 sind unter Last bzw. Druck verstellbar. Dazu ist das einen jeweiligen Schieberkolben 20 aufnehmende Ventilgehäuse 30 innen auf der den Ventilanschlüssen 32 bis 36 gegenüberliegenden Seite radial angebohrt und der Schieberkolben 20 mit Umfangsnuten für die radiale Druckentlastung der den Ventilanschlüssen 32 bis 36 zugeordneten Bohrungen versehen (vgl. den in Figur 4 mit "38" bezeichneten Bereich). Zudem ist dafür gesorgt, dass an den beiden axialen Enden des Schieberkolbens 20 jeweils der gleiche Druck anliegt. Im vorliegenden Fall liegt an diesen Enden jeweils der Hauptdruck P1 an (vgl. die Figuren 3 bis 5).

Wie insbesondere anhand der Figur 1 zu erkennen ist, sind die Ventile 18 in einer zentralen axialen Bohrung 40 des Jochs 14 angeordnet.

Über den Ventilanschluss 32 kann das Ventil 18 an den Gegenzonendruck P3 angelegt oder der Druck abgebaut, d.h. das Stützelement 16 drucklos oder auf einen definierten Restdruck (Schmierdruck) geschaltet werden. Über den Ventilanschluss 34 wird dem Ventil 18 der Randzonendruck P2 zugeführt. Über den Ventilanschluss 36 ist das Ventil 18 mit dem betreffenden Stützelement 16 (vgl. insbesondere Figur 2) verbunden.

Zumindest die Schieberkolben 20 der einer jeweiligen Randzone 46 zugeordneten Ventile 18 können mechanisch gekoppelt sein. Grundsätzlich können die Schieberkolben sämtlicher Ventile 18 mechanisch gekoppelt sein.

Im vorliegenden Fall ist der Schieberkolben 20 eines jeweiligen Ventils 18 über zwei drehfest mit einer drehbaren Welle 42 verbundene Kurvenscheiben 44 zwangsgesteuert verschiebbar, so dass das Ventil 18 über die Welle 42 entsprechend ansteuerbar ist. Wie anhand der Figur 1 zu erkennen ist, ist die Welle 42 in der zentralen axialen Bohrung 40 des Jochs 14 angeordnet. Sie verläuft also parallel zur Walzenachse X (vgl. Figur 2).

Im vorliegenden Fall sind die Schieberkolben 20 sämtlicher Ventile 18 über die gemeinsame Welle 42 ansteuerbar (vgl. Figur 1). Dabei sind die Ventile 18 über die zugeordnete Welle 42 so ansteuerbar, dass mit einer jeweiligen Drehung der Welle 42 um einen bestimmten Drehwinkel, z.B. um 30°, die Wirkbreite W der Walze 10 um eine Stützelement- bzw. Stützzonenbreite weitergeschaltet wird.

Zur Betätigung der Welle 42 kann beispielsweise ein mit einer Rasterung versehenes Handrad oder ein Ventildrehantrieb vorgesehen sein.

Die Kurvenscheiben 44 und /oder der Schieberkolben 20 können so ausgeführt sein, dass ein jeweiliges Stützelement 16 über das zugeordnete Ventil 18 mit einem stufenlos drosselbaren Randzonendruck P2 beaufschlagbar ist.

Es können insbesondere mehrere einer jeweiligen Randzone 46 zugeordneten Stützelemente 16 über die ihnen zugeordneten Ventile 18 so ansteuerbar sein, dass sich über den entsprechenden Bereich von Stützelementen 16 ein axial nach innen ansteigender oder abfallender Druckverlauf ergibt.

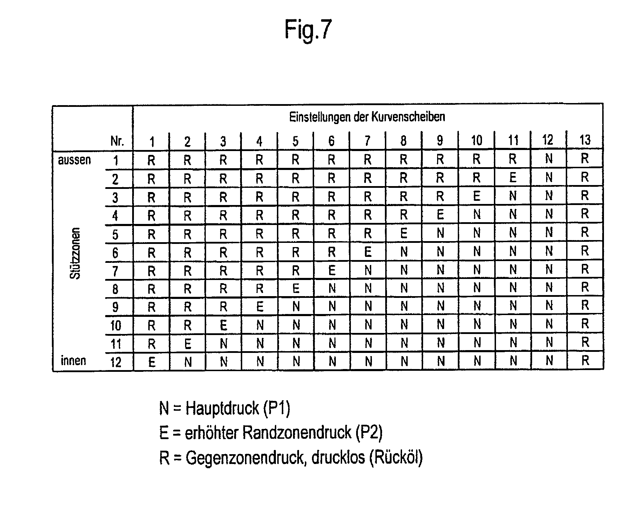

Wie insbesondere anhand der Figur 6b) zu erkennen ist, können bei einer jeweiligen Wirkbreitenverstellung im Bereich einer jeweiligen Randzone 46 jeweils zwei unmittelbar aufeinander folgende Stützelemente 16 über die zugeordneten Ventile 18 beispielsweise auch mit einem gestuften Randzonendruck beaufschlagt werden. Dabei kann, wie anhand der Figur 6b) zu erkennen ist, beispielsweise das jeweils axial innere der beiden Stützeelemente durch Abdrosseln des Randzonendrucks über eine entsprechende Ventilzwischenstellung mit dem geringeren Druck beaufschlagt sein.

Der Randzonendruck P2 kann kleiner oder auch größer als der Hauptdruck P1 sein.

Zwischen den Stützelementen 16 und dem Walzenmantel 12 kann wenigstens eine Stützleiste vorgesehen sein.

Figur 2 zeigt in vergrößerter Längsschnittdarstellung zwei aufeinander folgende Ventile der Durchbiegungsausgleichswalze gemäß Figur 1. Die Ventile 18 sind über die zentrale drehbare Welle 42 mechanisch miteinander gekoppelt.

Wie anhand der Figur 2 zu erkennen ist, ist an den beiden axialen Enden des Schieberkolbens 20 eines jeweiligen Ventils 18 jeweils eine Kurvenscheibe 44 vorgesehen. Die Kurvenscheiben 44 sind drehfest mit der zentralen Welle 42 verbunden. Entsprechend sind die Ventile 18 über die zentrale Welle 42 ansteuerbar, wobei der Schieberkolben 20 eines jeweiligen Ventils 18 über die beiden zugeordneten Kurvenscheiben 44 zwangsgesteuert verschiebbar ist.

Innerhalb der in einer zentralen Bohrung des Jochs 14 angeordneten zentralen Welle 42 herrscht der Hauptdruck P1, der den Ventilen 18 über radiale Bohrungen 48 und eine jeweilige Ringnut 50 zuführbar ist.

Über den Ventilanschluss 32 kann ein jeweiliges Ventil 18 mit dem Gegenzonendruck P3 beaufschlagt bzw. drucklos geschaltet werden. Über den Ventilanschluss 34 kann einem jeweiligen Ventil 18 der Randzonendruck P2 zugeführt werden. Mit dem zugeordneten Stützelemente 16 ist ein jeweiliges Ventil 18 über den Ventilanschluss 36 verbunden.

Figur 3 zeigt in schematischer Längsschnittdarstellung ein Ventil 18, dessen über die Kurvenscheiben 44 zwangsgesteuerter Schieberkolben 20 durch entsprechendes Verdrehen der zentralen Welle 42 in eine axiale Position verbracht wurde, in der das mit dem Ventilanschluss 36 verbundene Stützelement 16 druckentlastet ist. Es ist in diesem Fall also eine Verbindung zwischen den beiden Ventilanschlüssen 32 und 36 vorgesehen. Im Bereich der beiden axialen Enden des Schieberkolbens 20 liegt jeweils der Hauptdruck P1 an.

Figur 4 zeigt in schematischer Längsschnittdarstellung das Ventil 18 gemäß Figur 3, wobei in diesem Fall der Schieberkolben 20 jedoch eine solche axiale Position einnimmt, dass das zugeordnete Stützelement 16 mit einem beispielsweise erhöhten Randzonendruck P2 beaufschlagt ist. Der mit dem Stützelement 16 verbundene Ventilanschluss 36 ist hier also mit dem Ventilanschluss 34 verbunden.

Im Bereich der beiden axialen Enden des Schieberkolbens 20 liegt jeweils wieder der Hauptdruck P1 an. Wie anhand dieser Figur 4 überdies zu erkennen ist, ist das den Schieberkolben 20 aufnehmende Ventilgehäuse 30 innen auf der den Ventilanschlüssen 32 bis 36 gegenüberliegenden Seite radial angebohrt, während der Schieberkolben 290 mit Umfangsnuten für die radiale Druckentlastung der den Ventilanschlüssen 32 bis 36 zugeordneten Bohrungen versehen ist (vgl. den in Figur 4 mit "38" bezeichneten Bereich).

Der Schieberkolben 20 ist also generell sowohl axial als auch radial jeweils druckentlastet. Während in der Darstellung gemäß Figur 3 der dem Stützelement 16 zugeführte Druck PS beispielsweise dem Gegenzonendruck P3 und in der Darstellung gemäß Figur 4 dem Randzonendruck P2 entspricht, nimmt der Schieberkolben 20 in der Darstellung gemäß Figur 5 eine solche axiale Position ein, dass das zugeordnete Stützelement 16 mit dem Haupt- oder Normaldruck P1 beaufschlagt ist. Der mit dem Stützelement 16 verbundene Ventilanschluss 36 ist im vorliegenden Fall also über die Ringnut 50 und die Radialbohrung 48 (vgl. auch Figur 2) mit dem in der Zentralbohrung des Jochs 14 bzw. innerhalb der zentralen Welle 42 vorherrschenden Hauptdruck P1 verbunden.

Figur 6a zeigt den Verlauf des über die Bahnbreite erzeugten Drucks, wobei im Bereich der Randzonen 46 jeweils ein ungestufter, gleicher Druck vorliegt. Dieser Druck ist beim vorliegenden Ausführungsbeispiel höher als der Druck in der Walzenmittelzone 52.

Figur 6b zeigt den Verlauf des über die Bahnbreite erzeugten Drucks, wobei im vorliegenden Fall im Bereich der Randzonen 46 jedoch ein gestufter Druck vorliegt. Der gestufte Druck kann über eine Zwischenstellung des Ventilschiebers 20 erzeugt werden.

Figur 7 zeigt in tabellarischer Form rein beispielhaft verschiedene Einstellungen der Kurvenscheiben 44 (vgl. die Figuren 2 bis 5) und deren entsprechende Auswirkungen auf die verschiedenen Stützzonen. Dabei ist mit "N" jeweils der Haupt- oder Normaldruck P1, mit "E" jeweils ein beispielsweise erhöhter Randzonendruck P2 und mit "R" der Gegenzonendruck (Rücköl) P3 angegeben.

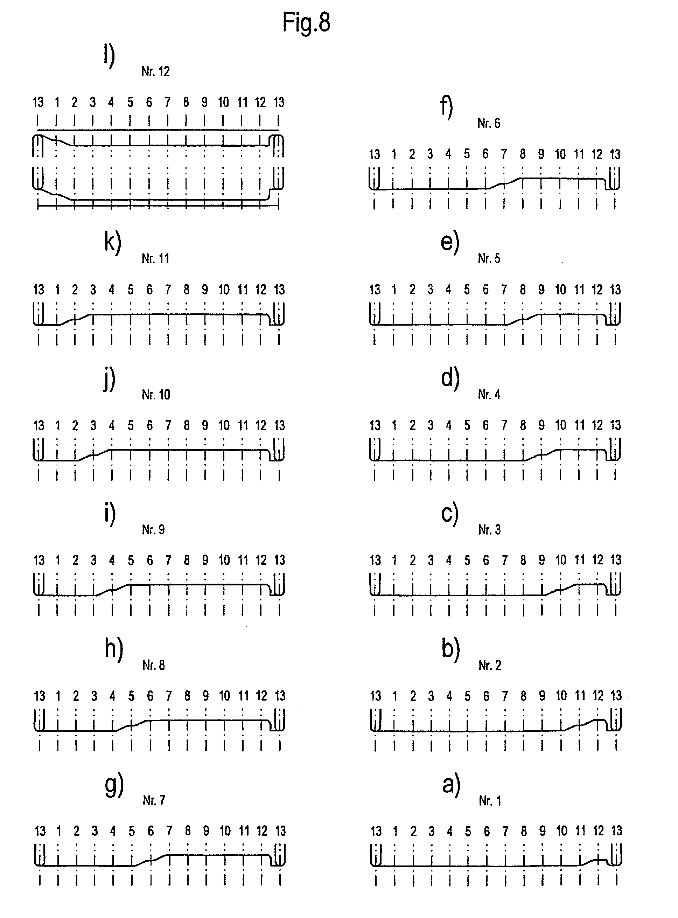

Die Figuren 8a bis 81 zeigen die verschiedenen, sich aus den Einstellungen gemäß Figur 7 ergebenden Druckverläufe über die Bahnbreite. Dabei entsprechen diese in den Figuren 8a bis 81 wiedergegebenen Druckverläufe den sich bei den Einstellungen 1 bis 13 der Kurvenscheiben gemäß Figur 7 ergebenden Druckverläufen.

Wie anhand der Figur 8 zu erkennen ist, liegt der erhöhte Druck E (P2) im vorliegenden Fall beispielsweise im Bereich zwischen dem Hauptdruck N (P1) und dem Gegenzonendruck (Rücköl) R (P3).

Wie eingangs bereits erwähnt, sind grundsätzlich beispielsweise auch Ventile 18 mit z.B. radial verstellbaren Schieberkolben 20 denkbar.

### Bezugszeichenliste

- 10: Durchbiegungsausgleichswalze
- 12: Walzenmantel
- 14: Joch
- 16: Stützelement
- 18: Ventil
- 20: Schieberkolben
- 22: axialer Kanal
- 24: axialer Kanal
- 26: axialer Kanal
- 28: Gegenzone
- 30: Ventilgehäuse
- 32: Ventilanschluss
- 34: Ventilanschluss
- 36: Ventilanschluss
- 38: Bereich
- 40: zentrale axiale Bohrung
- 42: drehbare Welle
- 44: Kurvenscheibe
- 46: Randzone
- 48: radiale Bohrung
- 50: Ringnut
- 52: Walzenmittelzone

- P1: Hauptdruck, Normaldruck
- P2: Randzonendruck
- P3: Gegenzonendruck
- PS: Druck am Stützelement
- W: Wirkbreite

- X: Walzenachse

## Patentansprüche

1. Durchbiegungseinstellwalze (10) mit einem umlaufenden Walzenmantel (12), einem den Walzenmantel (12) axial durchsetzenden drehfesten Joch (14) und einer Mehrzahl von in Axialrichtung aufeinander folgenden, vorzugsweise hydraulischen Stützelementen (16), über die die Innenseite des Walzenmantels (12) jeweils mit einer Stützkraft beaufschlagbar ist, wobei die Wirkbreite (W) der Walze (10) variabel einstellbar ist und jedem zur Einstellung der Wirkbreite (W) mit variablem Druck beaufschlagbaren Stützelement (16) jeweils ein Ventil (18) mit einem verstellbaren Schieberkolben (20) zugeordnet ist, der in unterschiedliche Positionen verstellbar ist, in denen das zugeordnete Stützelement (16) mit unterschiedlichen Drücken beaufschlagbar ist,
**dadurch gekennzeichnet,**
**dass** die Schieberkolben (20) zumindest eines Teils der Ventile (18) mechanisch gekoppelt sind.

2. Durchbiegungseinstellwalze nach Anspruch 1,
**dadurch gekennzeichnet,**
**dass** der Schieberkolben (20) axial verstellbar ist.

3. Durchbiegungseinstellwalze nach Anspruch 1,
**dadurch gekennzeichnet,**
**dass** der Schieberkolben (20) radial verstellbar ist.

4. Durchbiegungseinstellwalze nach einem der vorhergehenden Ansprüche,
**dadurch gekennzeichnet,**
**dass** der Schieberkolben (20) in wenigstens eine Position verstellbar ist, in der das zugeordnete Stützelement (16) mit einem von dem für die Stützelemente (16) im Bereich der Walzenmittelzone bestimmten Druck unabhängigen Druck (P2) beaufschlagbar ist.

5. Durchbiegungseinstellwalze nach einem der vorhergehenden Ansprüche,
**dadurch gekennzeichnet,**
**dass** die Ventile (18) unter Last bzw. Druck verstellbar sind.

6. Durchbiegungseinstellwalze nach einem der vorhergehenden Ansprüche,
**dadurch gekennzeichnet,**
**dass** das einen jeweiligen Schieberkolben (20) aufnehmende Ventilgehäuse (30) innen auf der den Ventilanschlüssen (32 - 36) gegenüberliegenden Seite radial angebohrt und der Schieberkolben (20) mit Umfangsnuten für die radiale Druckentlastung der den Ventilanschlüssen (32 - 36) zugeordneten Bohrungen versehen ist.

7. Durchbiegungseinstellwalze nach einem der vorhergehenden Ansprüche,
**dadurch gekennzeichnet,**
**dass** der Schieberkolben (20) eines jeweiligen Ventils (18) in zumindest drei Positionen verstellbar ist, in denen das zugeordnete Stützelement (16) mit unterschiedlichen Drücken beaufschlagbar ist.

8. Durchbiegungseinstellwalze nach einem der vorhergehenden Ansprüche,
**dadurch gekennzeichnet,**
**dass** ein jeweiliges Stützelement (16) über das zugeordnete Ventil (18) in Abhängigkeit von der insbesondere axialen bzw. radialen Position des Schieberkolbens (20) wahlweise zumindest mit einem für die Stützelemente (16) im Bereich der Walzenmittelzone bestimmten Hauptdruck (P1), mit einem Randzonendruck (P2) und mit einem Gegenzonendruck (P3) beaufschlagbar bzw. drucklos schaltbar ist.

9. Durchbiegungseinstellwalze nach Anspruch 8,
**dadurch gekennzeichnet,**
**dass** der Randzonendruck (P2) unabhängig vom Hauptdruck (P1) erzeugt ist.

10. Durchbiegungseinstellwalze nach Anspruch 9,
**dadurch gekennzeichnet,**
**dass** zur Erzeugung des Randzonendrucks (P2) ein getrennter Druckkreis vorgesehen ist.

11. Durchbiegungseinstellwalze nach einem der vorhergehenden Ansprüche,
**dadurch gekennzeichnet,**
**dass** die Ventile (18) im Bereich des Jochs (14) vorgesehen sind und deren Schieberkolben (20) jeweils relativ zu im Bereich des Jochs vorgesehenen Ventilanschlüssen verschiebbar sind.

12. Durchbiegungseinstellwalze nach Anspruch 11,
**dadurch gekennzeichnet,**
**dass** zumindest die Schieberkolben (20) der einer jeweiligen Randzone (46) zugeordneten Ventile (18) mechanisch gekoppelt sind.

13. Durchbiegungseinstellwalze nach Anspruch 12,
**dadurch gekennzeichnet,**
**dass** die Schieberkolben (20) sämtlicher Ventile (18) mechanisch gekoppelt sind.

14. Durchbiegungseinstellwalze nach einem der vorhergehenden Ansprüche,
**dadurch gekennzeichnet,**
**dass** der Schieberkolben (20) eines jeweiligen Ventils (18) über zwei drehfest mit einer drehbaren Welle (42) verbundene Kurvenscheiben (44) zwangsgesteuert verschiebbar und das Ventil (18) entsprechend über die Welle (42) ansteuerbar ist.

15. Durchbiegungseinstellwalze nach Anspruch 14,
**dadurch gekennzeichnet,**
**dass** die Welle (42) parallel zur Walzenachse (X) verläuft.

16. Durchbiegungseinstellwalze nach Anspruch 14 oder 15,
**dadurch gekennzeichnet,**
**dass** zumindest die Schieberkolben (20) der einer jeweiligen Randzone (46) zugeordneten Ventile (18) über eine gemeinsame Welle (42) ansteuerbar sind.

17. Durchbiegungseinstellwalze nach einem der vorhergehenden Ansprüche,
**dadurch gekennzeichnet,**
**dass** die Schieberkolben (20) sämtlicher Ventile (18) über eine durchgehende gemeinsame Welle (42) ansteuerbar sind.

18. Durchbiegungseinstellwalze nach einem der vorhergehenden Ansprüche,
**dadurch gekennzeichnet,**
**dass** die Ventile (18) über die zugeordnete Welle (42) so ansteuerbar sind, dass mit einer jeweiligen Drehung der Welle (42) um einen bestimmten Drehwinkel die Wirkbreite der Walze um eine Stützzonenbreite weitergeschaltet wird.

19. Durchbiegungseinstellwalze nach einem der vorhergehenden Ansprüche,
**dadurch gekennzeichnet,**
**dass** die Welle (42) über ein vorzugsweise mit einer Rasterung versehenes Handrad oder einen Ventildrehantrieb insbesondere stufenlos oder in Stufen betätigbar ist.

20. Durchbiegungseinstellwalze nach einem der vorhergehenden Ansprüche,
**dadurch gekennzeichnet,**
**dass** die Kurvenscheiben (44) und/oder der Schieberkolben (20) so ausgeführt sind, dass ein jeweiliges Stützelement (16) über das zugeordnete Ventil (18) mit einem stufenlos drosselbaren Randzonendruck (P2) beaufschlagbar ist.

21. Durchbiegungseinstellwalze nach einem der vorhergehenden Ansprüche,
**dadurch gekennzeichnet,**
**dass** mehrere einer jeweiligen Randzone (46) zugeordnete Stützelemente (16) über die ihnen zugeordneten Ventile (18) so ansteuerbar sind, dass sich über den entsprechenden Bereich von Stützelementen (16) ein axial nach innen ansteigender oder abfallender Druckverlauf ergibt.

22. Durchbiegungseinstellwalze nach einem der vorhergehenden Ansprüche,
**dadurch gekennzeichnet,**
**dass** der Walzenmantel (12) flexibel ist.

23. Durchbiegungseinstellwalze nach Anspruch 22,
**dadurch gekennzeichnet,**
**dass** der flexible Walzenmantel (12) aus homogenem Kunststoff, vorzugsweise aus homogenem Polyamid, besteht.

24. Durchbiegungseinstellwalze nach einem der vorhergehenden Ansprüche,
**dadurch gekennzeichnet,**
**dass** die Stützelemente (16) im Bereich der Walzenmittelzone mit einem gleichen Druck beaufschlagbar sind.

25. Durchbiegungseinstellwalze nach einem der vorhergehenden Ansprüche,
**dadurch gekennzeichnet,**
**dass** bei einer jeweiligen Wirkbreiteneinstellung im Bereich einer jeweiligen Randzone (46) jeweils zwei oder mehr bzw. zumindest zwei unmittelbar aufeinander folgende Stützelemente (16) z.B. über die zugeordneten Ventile (18) mit einem gestuften Randzonendruck beaufschlagbar sind.

26. Durchbiegungseinstellwalze nach Anspruch 25,
**dadurch gekennzeichnet,**
**dass** das jeweils axial innere der beiden Stützelemente (16) durch Abdrosseln des Randzonendrucks über eine entsprechende Ventilzwischenstellung mit dem geringeren Druck beaufschlagbar ist.

27. Durchbiegungseinstellwalze nach einem der vorhergehenden Ansprüche,
**dadurch gekennzeichnet,**
**dass** die Ventile in einer axialen Bohrung (40) des Jochs (14) vorgesehen sind.

28. Durchbiegungseinstellwalze nach einem der vorhergehenden Ansprüche,
**dadurch gekenneichnet,**
**dass** der Randzonendruck (P2) kleiner als der Hauptdruck (P1) ist.

29. Durchbiegungseinstellwalze nach der Ansprüche 1 bis 27,
**dadurch gekennzeichnet,**
**dass** der Randzonendruck (P2) größer als der Hauptdruck (P1) ist.

30. Durchbiegungseinstellwalze nach einem der vorhergehenden Ansprüche,
**dadurch gekennzeichnet,**
**dass** zwischen den Stützelementen (16) und dem Walzenmantel (12) wenigstens eine Stützleiste vorgesehen ist.

31. Verwendung der Durchbiegungseinstellwalze nach einem der vorhergehenden Ansprüche zum Glätten, zum Kalandrieren (z.B. Textilkalander), zum Bedrucken, zum Beschichten oder zum Veredeln von Materialbahnen.

## Claims

1. Controlled deflection roll (10) having a revolving roll shell (12), a yoke (14) that passes axially through the roll shell (12) and is secured against rotation, and a plurality of supporting elements (16) which follow one another in the axial direction, are preferably hydraulic and via which the inner side of the roll shell (12) can have a supporting force applied to it in each case, the working width (W) of the roll (10) being variably adjustable, and each supporting element (16) to which variable pressure can be applied in order to set the working width (W) in each case being assigned a valve (18) having an adjustable spool piston (20), which can be adjusted into different positions, in which the associated supporting element (16) can have different pressures applied to it,
**characterized in that** the spool pistons (20) of at least some of the valves (18) are coupled mechanically.

2. Controlled deflection roll according to Claim 1,
**characterized in that** the spool piston (20) can be adjusted axially.

3. Controlled deflection roll according to Claim 1,
**characterized in that** the spool piston (20) can be adjusted radially.

4. Controlled deflection roll according to one of the preceding claims, **characterized in that** the spool piston (20) can be adjusted into at least one position in which the associated supporting element (16) can have applied to it a pressure (P2) which is independent of the pressure intended for the supporting elements (16) in the region of the roll central zone.

5. Controlled deflection roll according to one of the preceding claims, **characterized in that** the valves (18) can be adjusted under load or pressure.

6. Controlled deflection roll according to one of the preceding claims, **characterized in that** the valve housing (30) accommodating a respective spool piston (20) is bored radially on the inside on the side opposite the valve connections (32 - 36), and the spool piston (20) is provided with circumferential grooves for the radial relief of the pressure of the bores assigned to the valve connections (32 - 36).

7. Controlled deflection roll according to one of the preceding claims, **characterized in that** the spool piston (20) of a respective valve (18) can be adjusted into at least three positions, in which the associated supporting element (16) can have different pressures applied to it.

8. Controlled deflection roll according to one of the preceding claims, **characterized in that** a respective supporting element (16) can optionally have applied to it, via the associated valve (18), at least a main pressure (P1) intended for the supporting elements (16) in the region of the roll central zone, an edge zone pressure (P2) or an opposing zone pressure (P3) or can be depressurized, depending on the in particular axial and radial position of the spool piston (20).

9. Controlled deflection roll according to Claim 8, **characterized in that** the edge zone pressure (P2) is produced independently of the main pressure (P1) .

10. Controlled deflection roll according to Claim 9, **characterized in that** a separate pressure circuit is provided in order to produce the edge zone pressure (P2).

11. Controlled deflection roll according to one of the preceding claims, **characterized in that** the valves (18) are provided in the region of the yoke (14) and their spool pistons (20) can in each case be adjusted relative to the valve connections provided in the region of the yoke.

12. Controlled deflection roll according to Claim 11, **characterized in that** at least the spool pistons (20) of the valves (18) assigned to respective edge zone (46) are coupled mechanically.

13. Controlled deflection roll according to Claim 12, **characterized in that** the spool pistons (20) of all the valves (18) are coupled mechanically.

14. Controlled deflection roll according to one of the preceding claims, **characterized in that** the spool piston (20) of a respective valve (18) can be displaced under positive control via two cam discs (44) connected securely to a rotatable shaft (42) so as to rotate with it, and the valve (18) can be driven in a corresponding manner via the shaft (42).

15. Controlled deflection roll according to Claim 14, **characterized in that** the shaft (42) runs parallel to the roll axis (X).

16. Controlled deflection roll according to Claim 14 or 15, **characterized in that** at least the spool pistons (20) of the valves (18) assigned to a respective edge zone (46) can be driven via a common shaft (42).

17. Controlled deflection roll according to one of the preceding claims, **characterized in that** the spool pistons (20) of all the valves (18) can be driven via a continuous common shaft (42).

18. Controlled deflection roll according to one of the preceding claims, **characterized in that** the valves (18) can be driven by the associated shaft (42) in such a way that, with a respective rotation of the shaft (42) by a specific angle of rotation, the working width of the roll is indexed by one supporting zone width.

19. Controlled deflection roll according to one of the preceding claims, **characterized in that** the shaft (42) can be actuated, in particular continuously or in steps, via a hand-wheel preferably provided with a detent, or a valve rotational drive.

20. Controlled deflection roll according to one of the preceding claims, **characterized in that** the cam discs (44) and/or the spool piston (20) are designed in such a way that a respective supporting element (16) can have applied to it, via the associated valve (18), an edge zone pressure (P2) that can be restricted continuously.

21. Controlled deflection roll according to one of the preceding claims, **characterized in that** a plurality of supporting elements (16) assigned to a respective edge zone (46) can be driven in such a way, via the valves (18) assigned to them, that the result is a pressure profile rising or falling axially inwards over the corresponding region of supporting elements (16).

22. Controlled deflection roll according to one of the preceding claims, **characterized in that** the roll shell (12) is flexible.

23. Controlled deflection roll according to Claim 22, **characterized in that** the flexible roll shell (12) consists of homogeneous plastic, preferably of homogeneous polyamide.

24. Controlled deflection roll according to one of the preceding claims, **characterized in that** the supporting elements (16) in the region of the roll central zone can have the same pressure applied to them.

25. Controlled deflection roll according to one of the preceding claims, **characterized in that**, during a respective working width setting in the region of a respective edge zone (46), in each case two or more or at least two immediately successive supporting elements (16) can have a graduated edge zone pressure applied to them, for example via the associated valves (18).

26. Controlled deflection roll according to Claim 25, **characterized in that** the respectively axially inner of the two supporting elements (16) can have the lower pressure applied to it by restricting the edge zone pressure via a corresponding intermediate valve position.

27. Controlled deflection roll according to one of the preceding claims, **characterized in that** the valves are provided in an axial bore (40) in the yoke (14).

28. Controlled deflection roll according to one of the preceding claims, **characterized in that** the edge zone pressure (P2) is lower than the main pressure (P1) .

29. Controlled deflection roll according to Claims 1 to 27, **characterized in that** the edge zone pressure (P2) is higher than the main pressure (P1) .

30. Controlled deflection roll according to one of the preceding claims, **characterized in that** at least one supporting strip is provided between the supporting elements (16) and the roll shell (12).

31. Use of the controlled deflection roll according to one of the preceding claims for smoothing, for calendering (e.g. textile calender), for printing, for coating or for finishing material webs.

## Revendications

1. Rouleau (10) à courbure réglable, avec une enveloppe de rouleau entourante (12), un berceau (14) solidaire en rotation traversant axialement l'enveloppe de rouleau (12), et une pluralité d'éléments de soutien (16), de préférence hydrauliques, se succédant en direction axiale, au moyen desquels la face intérieure de l'enveloppe de rouleau (12) peut être sollicitée par une force de soutien respective, sachant que la largeur active (W) du rouleau (10) peut être réglée de manière variable et qu'à chaque élément de soutien (16) pouvant être sollicité avec une pression variable afin de régler la largeur active (W) est associée une soupape respective (18) dotée d'un piston-tiroir réglable (20) qui peut être réglé dans différentes positions dans lesquelles l'élément de soutien associé (16) peut être sollicité avec des pressions différentes,
**caractérisé en ce que** les pistons-tiroirs (20) d'au moins une partie des soupapes (18) sont mécaniquement couplés.

2. Rouleau à courbure réglable selon la revendication 1, **caractérisé en ce que** le piston-tiroir (20) est réglable axialement.

3. Rouleau à courbure réglable selon la revendication 1, **caractérisé en ce que** le piston-tiroir (20) est réglable radialement.

4. Rouleau à courbure réglable selon l'une quelconque des revendications précédentes, **caractérisé en ce que** le piston-tiroir (20) peut être réglé dans au moins une position dans laquelle l'élément de soutien associé (16) peut être sollicité avec une pression (P2) indépendante de la pression déterminée pour les éléments de soutien (16) dans la région de la zone médiane du rouleau.

5. Rouleau à courbure réglable selon l'une quelconque des revendications précédentes, **caractérisé en ce que** les soupapes (18) peuvent être réglées sous charge ou encore sous pression.

6. Rouleau à courbure réglable selon l'une quelconque des revendications précédentes, **caractérisé en ce que** le boîtier de soupape (30) recevant un piston-tiroir respectif (20) est percé intérieurement radialement sur le côté opposé aux branchements de soupape (32 à 36), et le piston-tiroir (20) est pourvu de rainures circonférentielles pour les perçages affectés à la détente radiale des branchements de soupape (32 à 36).

7. Rouleau à courbure réglable selon l'une quelconque des revendications précédentes, **caractérisé en ce que** le piston-tiroir (20) d'une soupape respective (18) peut être réglé dans au moins trois positions dans lesquelles l'élément de soutien associé (16) peut être sollicité avec des pressions différentes.

8. Rouleau à courbure réglable selon l'une quelconque des revendications précédentes, **caractérisé en ce qu'**un élément de soutien respectif (16) peut au choix, au moyen de la soupape associée (18) et en fonction de la position notamment axiale ou radiale du piston-tiroir (20), être sollicité au moins avec une pression principale (P1) déterminée pour les éléments de soutien (16) dans la région de la zone médiane du rouleau, avec une pression (P2) de zones de bords et avec une pression (P3) de zones antagonistes, ou être mis hors pression.

9. Rouleau à courbure réglable selon la revendication 8, **caractérisé en ce que** la pression (P2) de zones de bords est produite indépendamment de la pression principale (P1).

10. Rouleau à courbure réglable selon la revendication 9, **caractérisé en ce qu'**un circuit de pression séparé est prévu pour produire la pression (P2) de zones de bords.

11. Rouleau à courbure réglable selon l'une quelconque des revendications précédentes, **caractérisé en ce que** les soupapes (18) sont prévues dans la région du berceau (14) et leurs pistons-tiroirs (20) peuvent être respectivement déplacés par rapport aux branchements de soupape prévus dans la région du berceau.

12. Rouleau à courbure réglable selon la revendication 11, **caractérisé en ce qu'**au moins les pistons-tiroirs (20) des soupapes (18) associés à une zone de bord respective (46) sont mécaniquement couplés.

13. Rouleau à courbure réglable selon la revendication 12, **caractérisé en ce que** les pistons-tiroirs (20) de toutes les soupapes (18) sont mécaniquement couplés.

14. Rouleau à courbure réglable selon l'une quelconque des revendications précédentes, **caractérisé en ce que** le piston-tiroir (20) d'une soupape (18) respective peut être déplacé par commande forcée au moyen de deux cames disques (44) liées en rotation à un arbre rotatif (42), et la soupape (18) peut être asservie d'une manière correspondante au moyen de l'arbre (42) .

15. Rouleau à courbure réglable selon la revendication 14, **caractérisé en ce que** l'arbre (42) s'étend parallèlement à l'axe (X) du rouleau.

16. Rouleau à courbure réglable selon la revendication 14 ou 15, **caractérisé en ce qu'**au moins les pistons-tiroirs (20) des soupapes (18) associées à une zone de bord respective (46) peuvent être asservis au moyen d'un arbre commun (42).

17. Rouleau à courbure réglable selon l'une quelconque des revendications précédentes, **caractérisé en ce que** les pistons-tiroirs (20) de toutes les soupapes (18) peuvent être asservis au moyen d'un arbre commun (42) s'étendant de bout en bout.

18. Rouleau à courbure réglable selon l'une quelconque des revendications précédentes, **caractérisé en ce que** les soupapes (18) peuvent être asservies au moyen de l'arbre associé (42) de telle sorte qu'avec une rotation respective de l'arbre (42) d'un angle de rotation déterminé, la largeur active du rouleau est avancée d'une largeur de zone de soutien.

19. Rouleau à courbure réglable selon l'une quelconque des revendications précédentes, **caractérisé en ce que** l'arbre (42) peut être actionné, notamment en continu ou par paliers, au moyen d'un volant de préférence pourvu d'un crantage, ou au moyen d'un entraînement rotatif de soupape.

20. Rouleau à courbure réglable selon l'une quelconque des revendications précédentes, **caractérisé en ce que** les cames disques (44) et/ou le piston-tiroir (20) sont réalisés de telle sorte qu'un élément de soutien respectif (16) peut être sollicité au moyen de la soupape associée (18) avec une pression (P2) de zones de bords pouvant être étranglée en continu.

21. Rouleau à courbure réglable selon l'une quelconque des revendications précédentes, **caractérisé en ce que** plusieurs éléments de soutien (16) associés à une zone de bord respective (46) peuvent, au moyen des soupapes (18) qui leur sont associées, être asservis de telle sorte qu'on obtient sur la région correspondante d'éléments de soutien (16) une allure de pression augmentant ou diminuant axialement vers l'intérieur.

22. Rouleau à courbure réglable selon l'une quelconque des revendications précédentes, **caractérisé en ce que** l'enveloppe de rouleau (12) est flexible.

23. Rouleau à courbure réglable selon la revendication 22, **caractérisé en ce que** l'enveloppe de rouleau flexible (12) est constituée d'une matière plastique homogène, de préférence de polyamide homogène.

24. Rouleau à courbure réglable selon l'une quelconque des revendications précédentes, **caractérisé en ce que** les éléments de soutien (16) peuvent être sollicités avec une pression identique dans la région de la zone médiane du rouleau.

25. Rouleau à courbure réglable selon l'une quelconque des revendications précédentes, **caractérisé en ce que**, lors d'un réglage respectif de la largeur active, dans la région d'une zone de bord respective (46), deux éléments de soutien (16) ou davantage, ou encore au moins deux éléments de soutien (16) directement successifs, peuvent être respectivement sollicités, par exemple au moyen des soupapes associées (18), avec une pression de zones de bords échelonnée.

26. Rouleau à courbure réglable selon la revendication 25, **caractérisé en ce que**, parmi les deux éléments de soutien (16), l'élément axialement intérieur respectif peut, par étranglement de la pression de zones de bords au moyen d'une position intermédiaire correspondante de la soupape, être sollicité avec la pression inférieure.

27. Rouleau à courbure réglable selon l'une quelconque des revendications précédentes, **caractérisé en ce que** les soupapes sont prévues dans un perçage axial (40) du berceau (14).

28. Rouleau à courbure réglable selon l'une quelconque des revendications précédentes, **caractérisé en ce que** la pression (P2) de zones de bords est inférieure à la pression principale (P1).

29. Rouleau à courbure réglable selon l'une quelconque des revendications 1 à 27, **caractérisé en ce que** la pression (P2) de zones de bords est supérieure à la pression principale (P1) .

30. Rouleau à courbure réglable selon l'une quelconque des revendications précédentes, **caractérisé en ce qu'**au moins une barre de soutien est prévue entre les éléments de soutien (16) et l'enveloppe de rouleau (12).

31. Utilisation du rouleau à courbure réglable selon l'une quelconque des revendications précédentes pour le lissage, le calandrage (calandre textile par exemple), l'impression, le revêtement ou l'ennoblissement de bandes de matériau.
